# EUROPEAN PATENT APPLICATION

(11) **EP 1 813 553 A1**
(43) Date of publication of application: **01.08.2007**
(21) Application number: 05806133.4
(22) Date of filing: 10.11.2005
(51) Int. Cl.: B65D 85/10, B32B 29/00, B65D 65/40, B65D 81/24, D21H 27/30

(54) **CIGARETTE PACKAGE, WRAPPING PAPER FOR CIGARETTE PACKAGE, AND METHOD AND MACHINE FOR MANUFACTURING WRAPPING PAPER**

(30) Priority: 17.11.2004 JP 2004333293
(71) Applicant: Japan Tobacco, Inc., Tokyo 105-8422 (JP)
(72) Inventor: TANBO, Hitoshi, JAPAN TOBACCO INC., Tokyo 130-8603 (JP); YUKIFUNE, Kanji, TOKYO PAPER CONVERT.MFG. CO.LTD., Tokyo 105-0013 (JP); ONIMARU, Kinya, NIPPON SEIRO Co., Ltd., Tokyo 104-0033 (JP)
(74) Representative: Peckmann, Ralf
(86) International application number: PCT/JP2005/020630
(87) International publication number: WO 2006/054481

(57) **Abstract**

A cigarette package is provided with an outer box (44) and an inner pack (56) contained within the outer box (44), and the inner pack (56) includes a cigarette bundle and an inner wrapper (58) covering the cigarette bundle. The inner wrapper (58) has first and second paper layers (4, 6) forming the opposite surfaces of the inner wrapper (58), and a moisture-proof layer (8) interposed between the first and second paper layers (4, 6), the moisture-proof layer (8) is made of only paraffin wax and functions also as an adhesive agent for bonding the first and second paper layers (4, 6).

## Description

### Technical Field

This invention relates to an environmentally-friendly cigarette package which can exclude moisture and retain an aroma satisfactorily. This invention also relates to wrapping paper with high biodegradability suitable for such cigarette package, and a method and machine for manufacturing such wrapping paper.

### Background Art

The cigarette package comprises an outer box and an inner pack contained within the outer box, and the inner pack includes a bundle of smoking articles such as cigarettes or filter cigarettes and an inner wrapper, that is, wrapping paper covering the smoking-article bundle.

For such inner wrapper, aluminum-vapor-deposited paper is generally used. The aluminum-vapor-deposited paper has a paper layer and an aluminum film vapor-deposited on one surface of the paper layer. Such aluminum film is very thin, so that the aluminum-vapor-deposited paper is insufficient in respect of the capacity to block moisture and air. Thus, regarding the moisture-excluding capacity, namely the capacity to protect the smoking-article bundle from moisture, and the aroma-retaining capacity, namely the capacity to retain the aroma of the smoking articles, the aluminum-vapor-deposited paper cannot exclude moisture and retain the aroma for a long period of time.

Thus, normally, the cigarette package further comprises a film enveloping the outer box, and the film includes a tear tape. Such film not only protects the smoking-article bundle from moisture and retains the aroma thereof, but also is useful to prevent tampering with the smoking-article bundle.

The above-described packaging for the smoking-article bundle has, however, a triple structure consisting of the aluminum-vapor-deposited paper, the outer box and the film, which is a factor causing an increase in the cost of the cigarette package.

Further, unlike the aluminum-vapor-deposited paper and the outer box, the film is disposed of as nonburnable matter. Thus, the existence of the film is a factor causing an increase of environmental burdens associated with disposal.

For these reasons, the cigarette package without the film is desired. In such cigarette package, the inner wrapper covering the smoking-article bundle needs to have in itself the moisture-excluding and aroma-retaining capacities for the smoking articles.

Wrapping paper which satisfies such demand is disclosed in Japanese Unexamined Patent Publication No. Hei 10-183498, for example. The laminated paper disclosed in this publication has two paper layers and a moisture-proof layer interposed between these paper layers.

The moisture-proof layer of the laminated paper disclosed in this publication, however, contains a polymer. Thus, when such laminated paper is used for the inner wrapper of the cigarette package, the odor of the polymer can spread from the laminated paper to the smoking articles and damage the flavor and taste of the smoking articles.

Further, since the polymer which is the major constituent of the moisture-proof layer is of low biodegradability, the disposal of the laminated paper increases environmental burdens.

### Disclosure of the Invention

An object of this invention is to provide a cigarette package which can exclude moisture and retain an aroma satisfactorily and which can decrease environmental burdens associated with disposal. Another object of this invention is to provide wrapping paper suitable for such cigarette package and a method and machine for manufacturing such wrapping paper.

In order to achieve the above object, a cigarette package according to this invention comprises an openable and closable outer box, and an inner pack contained within the outer box, the inner pack including a bundle of rod-shaped smoking articles and an inner wrapper covering the bundle, the inner wrapper including a first paper layer forming one surface of the inner wrapper, a second paper layer forming the other surface of the inner wrapper, and a moisture-proof layer interposed between the first and second paper layers, the moisture-proof layer containing paraffin wax as a major constituent and having a thickness sufficient to function as an adhesive agent for bonding the first and second paper layers.

Since the inner wrapper has a moisture-proof layer within itself, the inner wrapper has a capacity to protect the rod-shaped smoking articles from moisture and retain the aroma thereof, satisfactorily, for a long period of time. Further, since the major constituent of the moisture-proof layer is paraffin wax, the inner wrapper has high biodegradability. Thus, the environmental burdens which the disposal of the inner wrapper influences are decreased to a great degree. Further, since the paraffin wax is odorless, the moisture-proof layer does not have an adverse effect on the aroma of the rod-shaped smoking articles.

Specifically, the moisture-proof layer consists only of paraffin wax and has an adhesive strength of about 15mN/cm or greater relative to the first and second paper layers. Such moisture-proof layer has a thickness produced by applying paraffin wax in an application quantity of about 6g/m² or more.

Meanwhile, the first and second paper layers are both made of glassine paper, and each of them has a basis weight of 20 to 40g/m², for example.

A method of manufacturing wrapping paper for obtaining the above-described inner wrapper comprises steps of: applying a moisture-proof material containing paraffin wax as a major constituent onto a first paper web, thereby forming a moisture-proof layer with a thickness greater than or equal to a predetermined thickness, placing a second paper web on the moisture-proof layer of the first paper web, thereby forming a laminated web with the moisture-proof layer interposed between the first and second paper webs, and applying pressure to the laminated web within a predetermined pressure range, while keeping the laminated web at a temperature which is higher than a melting point of the moisture-proof material within a predetermined temperature difference range, thereby bonding the first and second paper webs by means of the moisture-proof layer functioning as an adhesive agent.

In this case, it is desirable that the predetermined temperature difference range should be 10 to 50°C and that the predetermined pressure range should be 0.20 to 0.40mPa.

Further, a machine for manufacturing the above-described wrapping paper comprises a first feed path for feeding a first paper web; an applicator provided on the first feed path, for applying a moisture-proof material containing paraffin wax as a major constituent onto the first paper web, thereby forming a moisture-proof layer with a thickness greater than or equal to a predetermined thickness; a second feed path for feeding a second paper web to the first feed path; a roller unit provided between a terminal end of the second feed path and the first feed path, for receiving the first and second paper webs from the first and second feed paths, forming a laminated web with the moisture-proof layer interposed between the first and second paper webs, and delivering the laminated web; and a bonding device for applying pressure to the laminated web within a predetermined pressure range, while keeping the laminated web at a temperature which is higher than a melting point of the moisture-proof material within a predetermined temperature difference range, thereby bonding the first and second paper webs by means of the moisture-proof layer functioning as an adhesive agent.

The above-described method and machine manufactures the wrapping paper suitable for the inner wrapper of the cigarette package. The other objects, advantages, etc. of this invention will become clear from the description given below.

### Brief Description of the Drawings

[FIG. 1] A cross-sectional view showing an embodiment of wrapping paper.
[FIG. 2] A diagram schematically showing the structure of a machine for manufacturing the wrapping paper shown in FIG. 1.
[FIG. 3] A graph showing the relation between application quantity and peel strength when pressure applied to the laminated web is varied as a parameter.
[FIG. 4] A graph showing the relation between application quantity and peel strength when temperature difference from the melting point of paraffin wax is varied as a parameter.
[FIG. 5] A perspective view of a cigarette package in which the wrapping paper shown in FIG. 1 is used for an inner wrapper.
[FIG. 6] A perspective view showing the cigarette package of FIG. 5 in an opened state.
[FIG. 7] A cross-sectional view showing how an inner wrapper, an inner frame and an outer box are bonded to each other when the cigarette package of FIG. 5 is not opened yet.
[FIG. 8] A graph comparing friction coefficients for aluminum-vapor-deposited paper, an inner wrapper, and waxed paper.
[FIG. 9] A perspective view showing an inner pack contained in the cigarette package of FIG. 5.

### Best Mode of Carrying out the Invention

### Wrapping paper

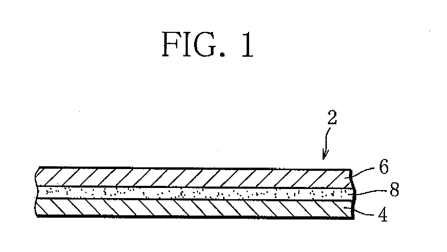

As clear from FIG. 1, an embodiment of wrapping paper 2 has a triple structure. The wrapping paper 2 includes translucent first and second paper layers 4, 6, where the first and second paper layers 4, 6 form the opposite surfaces of the wrapping paper 2. Desirably, the first and second paper layers 4, 6 are both made of glassine paper, for example. The basis weight of the glassine paper is selected within the range of 20 to 40g/m², more desirably, 25 to 35g/m². In a specified example, the basis weights of the first and second paper layers 4, 6 are each 30.5g/m².

The wrapping paper 2 further includes a moisture-proof layer 8 between the first and second paper layers 4, 6, where the moisture-proof layer is virtually made of paraffin wax. Here, the word "virtually" means that substances other than paraffin wax are allowed to be contained in the moisture-proof layer 8 to the extent that they do not have an adverse effect on the biodegradability of the moisture-proof layer 8.

In order to impart a high biodegradability to the moisture-proof layer 8, however, it is desirable that the moisture-proof layer 8 should be made only of paraffin wax. More desirably, the paraffin wax forming the moisture-proof layer 8 contains about 10 weight % or more of isoparaffin.

The moisture-proof layer 8 has a function as an adhesive agent for bonding the first and second paper layers 4, 6, in addition to the original function of blocking the passage of air, aroma and moisture that have penetrated into the first or second layer 4, 6. Here, the moisture-proof layer 8 has an adhesive strength of about 15mN/cm or greater, more desirably, 20mN/cm or greater, relative to the first and second paper layers 4, 6.

In order to have the above-mentioned adhesive strength, the moisture-proof layer 8 is formed by applying paraffin wax onto the first or second paper layer 4, 6 in the quantity of about 6g/m² or more. When pressure is applied onto the first and second paper layers 4, 6 from both sides, with paraffin wax in a melted state with low viscosity interposed between the first and second paper layers 4, 6, part of the paraffin wax can spread between the fibers of glassine paper forming the first and second paper layers 4, 6, since the thickness of the paraffin wax is great as mentioned above. The paraffin wax that has spread this way functions as an adhesive agent for bonding the first and second paper layers 4, 6. Thus, the first and second paper layers 4, 6 are bonded with the moisture-proof layer 8 between, so that the wrapping paper 2 having the above-mentioned triple structure is obtained.

Since the wrapping paper 2 has the moisture-proof layer 8, that is, the paraffin wax layer within itself, even when air, aroma or moisture penetrates into the first or second paper layer 4, 6, further penetration thereof is blocked by the paraffin wax layer. Thus, the wrapping paper 2 has high moisture-excluding and aroma-retaining capacities and is particularly suited to be used for wrapping articles which dislike moisture or have a characteristic aroma, etc.

Further, since the moisture-proof layer 8 is virtually formed of paraffin wax, the moisture-proof layer 8 is odorless, and therefore, spread of odor from the moisture-proof layer 8 to the articles does not happen.

Further, if the moisture-proof layer 8 is made only of paraffin wax, the moisture-proof layer 8 as well as the first and second paper layers 4, 6 has high biodegradability. Thus, the disposal of the wrapping paper 2 does not increase environmental burdens.

### Machine and method for manufacturing wrapping paper

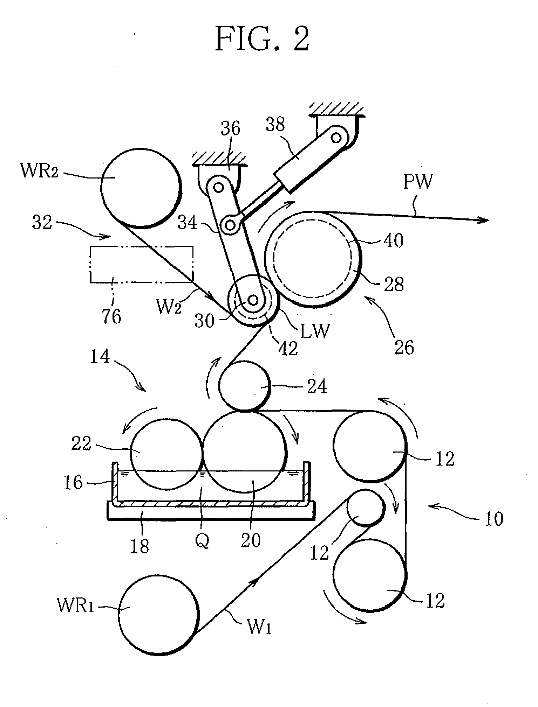

The above-described triple-structure wrapping paper 2 is manufactured with a machine shown in FIG. 2. This manufacturing machine and the method of manufacturing the wrapping paper 2 will be described below.

The manufacturing machine comprises a first web roll WR₁, and a first paper web W₁, which will form a first paper layer 4, is unwound from the first web roll WR₁. A first feed path 10 extends from the first web roll WR₁, and a feed roller (not shown) is provided on the first feed path 10. As the feed roller is rotated, the first paper web W₁ is fed from the first web roll WR₁, along the first feed path 10.

The first feed path 10 includes a plurality of guide rollers 12, and downstream of the guide rollers 12, an applicator 14 is disposed. The applicator 14 includes a wax tub 16, and the wax tub 16 holds paraffin wax Q.

The applicator 14 includes a heater 18 arranged at the bottom of the tub 16, and the heater 18 heats paraffin wax Q to temperature of 90 to 120°C. This heating temperature is higher than the general melting-point of paraffin wax which ranges from 40 to 70°C. Thus, the paraffin wax in the wax tub 16 is in a melted state and has low viscosity.

Within the wax tub 16, an applicator roller 20 is rotatably arranged, with the cylindrical surface thereof partly immersed in the paraffin wax Q. Within the wax tub 16, adjacent to the applicator roller 20, also an adjuster roller 20 is rotatably arranged, with the cylindrical surface thereof partly immersed in the paraffin wax Q. The adjuster roller 22 rotates in the opposite direction to the applicator roller 20, and a gap between the rollers 20, 22 determines the thickness of a film of paraffin wax Q formed on the cylindrical surface of the applicator roller 20. Thus, the thickness of the film of paraffin wax Q on the applicator roller 20 can be changed by adjusting the gap between the rollers 20, 22.

Further, near the applicator roller 20, a back roller 24 is rotatably arranged. The back roller 24 and the applicator roller 20 are on the opposite sides of the first feed path 10. When the first paper web W₁ passes between the back roller 24 and the applicator roller 20, a film of paraffin wax Q is applied onto one side of the first paper web W₁ by the applicator roller 20. The amount of paraffin wax Q applied is greater than or equal to about 6g/m², and the paraffin wax Q applied forms a moisture-proof layer on one side of the first paper web W₁.

On the first feed path 10, downstream of the applicator 14, a roller unit 26 is disposed. The roller unit 26 includes a receiver roller 28 and a press roller 30 adjacent to the receiver roller 28.

The press roller 30 can receive a second paper web W₂, which will form a second paper layer 6, in addition to the first paper web N₁. The second paper web W₂ is fed to the press roller 30 from a web roll WR₂ along a second feed path 32. The first and second paper webs W₁, W₂ are arranged in layers on the cylindrical surface of the press roller 30, where the above-mentioned moisture-proof layer is located between the first and second paper webs W₁, W₂. Thus, a triple-structure laminated web LW is formed on the press roller 30.

Then, when the laminated web LW passes between the receiver roller 28 and the press roller 30, pressure is applied to the laminated web LW by means of the press roller 30. Specifically, a pressure within the range of 0.2 to 0.40mPa, for example a pressure of 0.30mPa is applied to the laminated LW. In this case, the heating temperature for paraffin wax Q is 10 to 50°C higher than the melting point thereof, for example 30°C higher than the melting point.

As clear from FIG. 2, in order to apply pressure to the laminated web LW, the press roller 30 is rotatably supported by a swing arm 34 at the lower end of the arm 34, and the swing arm 34 is rotatably supported by a bracket 36 fitted to a frame, at the upper end of the arm 34. The swing arm 34 and the frame are connected by means of an air cylinder 38, and the air cylinder 38 forces the swing arm 34 toward the receiver roller 28. Thus, the press roller 30 is pressed against the receiver roller 28, with the laminated web LW between, thereby applying pressure to the laminated web LW within the above-mentioned pressure range.

The receiver roller 28 and the press roller 30 incorporate heaters 40, 42, respectively. The heaters 40, 42 heat the laminated web LW through the rollers 28, 30, thereby keeping the moisture-proof layer, that is, the paraffin wax Q at a temperature higher than its melting point within the above-mentioned temperature difference range.

Thus, even if the temperature of the applied melted paraffin wax Q drops in the period of time from a film of paraffin wax Q is applied onto one side of the first paper web W₁ until that part of the first paper web W₁ reaches the roller unit 26, the laminated web LW is heated by heat from the rollers 28, 30 when passing between the receiver roller 28 and the press roller 30, so that the paraffin wax Q is kept at a temperature sufficiently higher than its melting point and therefore the viscosity thereof is kept low. In this condition, the press roller 30 applies pressure to the laminated web LW, so that in the laminated web LW, part of the paraffin wax Q with low viscosity spreads between the fibers of the first and second paper webs W₁, W₂.

Then, in the process in which the laminated web LW passes through the roller unit 26 and is fed along the first feed path 10, the paraffin wax Q within the laminated web LW is cooled to below its melting point by air around and become solidified. The solidified paraffin wax Q, that is, the moisture-proof layer functions as an adhesive agent for bonding the first and second paper webs W₁, W₂, so that a triple-structure wrapping web PW with the moisture-proof layer between the first and second paper webs W₁, W₂ is obtained. Then, the wrapping web PW is cut into a desired size, so that the above-mentioned wrapping paper 2 is obtained.

As clear from the above description of the manufacturing machine, the method of manufacturing the wrapping paper 2 comprises a step of first applying paraffin wax Q in a melted state onto one side of a first paper web W₁, thereby forming a moisture-proof layer on the first paper web W₁; a step of placing a second paper web W₂ over the first paper web W₁ with the moisture-proof layer between, thereby forming a laminated web LW; and a step of applying a predetermined pressure to the laminated web LW while keeping the paraffin wax Q at a temperature 30°C higher than its melting point.

### Embodiments of wrapping paper

Different wrapping papers A, B with paraffin wax Q applied in different quantities were manufactured. Regarding the wrapping papers A, B, the adhesive strength of the moisture-proof layer 8 and the moisture permeability of the wrapping paper were measured. The measurement results are shown in table 1 below.

Regarding isoparaffin concentration, the paraffin wax Q forming the moisture-proof layer 8 of the wrapping paper A contains 10 weight % or less (specifically, 2.1 weight %) of isoparaffin, while the paraffin wax Q forming the moisture-proof layer 8 of the wrapping paper B contains 10 weight % or more (specifically, 13.5 weight %) of isoparaffin.

The adhesive strength of the moisture-proof layer 8 was measured according to the test method stipulated in JIS K6854-3 (measurement temperature 25°C), and the moisture permeability was measured according to the test method stipulated in JIS Z0208 (measurement temperature 40°C, humidity 90%).

**[Table 1]**

| Application quantity (g/m²) | Adhesive strength (mN/cm) | | Moisture permeability (g/m²/24hr) | |
|---|---|---|---|---|
| | Moisture-proof layer of wrapping paper A | Moisture-proof layer of wrapping paper B | Wrapping paper A | Wrapping paper B |
| 3.2 | 6. 9 | -- | 13 7 . 8 | - |
| 3.3 | - | 7. 6 | - | 156. 2 |
| 4.5 | 7.5 | - | 105. 6 | - |
| 4.7 | - | 7. 8 | - | 99. 8 |
| 5.4 | 7.9 | - | - | - |
| 5.6 | - | 9. 8 | - | 50. 6 |
| 6.1 | 15. 1 | - | 35. 4 | - |
| 6.2 | - | 19 . 5 | - | 42. 1 |
| 6.4 | 17.0 | - | 34. 6 | - |
| 6.8 | - | -- | -- | - |
| 7.2 | 28. 5 | -- | 32. 2 | - |
| 7.3 | - | 35. 5 | - | 41. 7 |

As clear from table 1, when the moisture-proof layer 8 in the wrapping papers A, B is formed from paraffin wax Q in the application quantity of about 6g/m² or more, the moisture-proof layer 8 has a thickness sufficient to function as an adhesive layer, or in other words, to have an adhesive strength of about 15mN/cm or greater, and the wrapping papers A, B have a moisture permeability of about 45g/m²/24hr or less.

Further, wrapping papers C to F were manufactured by using paraffin waxes Q which were different in isoparaffin concentration (weight %). Also regarding the wrapping papers C to F, the adhesive strength of the moisture-proof layer 8 was measured according to the same test method (JIS K6854-3). The measurement results are shown in table 2 below.

**[Table 2]**

| | | Wrapping paper C | Wrapping paper D | Wrapping paper E | Wrapping paper F |
|---|---|---|---|---|---|
| Melting point °C | | 58.2 | 60.5 | 68.2 | 70.0 |
| Concentration (weight %) | | 2 | 2.1 | 6.0 | 13.2 |
| Application quantity (g/m²) | | 6.4 | 6.2 | 6.4 | 6.5 |
| Adhesive power at each measurement temperature (mN/cm) | 20°C | 13.8 | 14.1 | 15.2 | 29.8 |
| | 30°C | 16.8 | 17.7 | 20.4 | 36.2 |
| | 40°C | 18.5 | 21.4 | 22.2 | 44.9 |
| | 50°C | 9.8 | 14.6 | 21.5 | 28.3 |
| | 55°C | Unmeasurable | 10.4 | 18.3 | 20.8 |

As clear from table 2, in any of the wrapping papers C to F, the moisture-proof layer 8 is formed from paraffin wax Q in the application quantity of 6g/m² or more, and therefore has sufficient adhesive strength. Further, table 2 shows that when the concentration of isoparaffin in paraffin wax Q is 10 weight % or higher, the moisture-proof layer 8 has much increased adhesive strength.

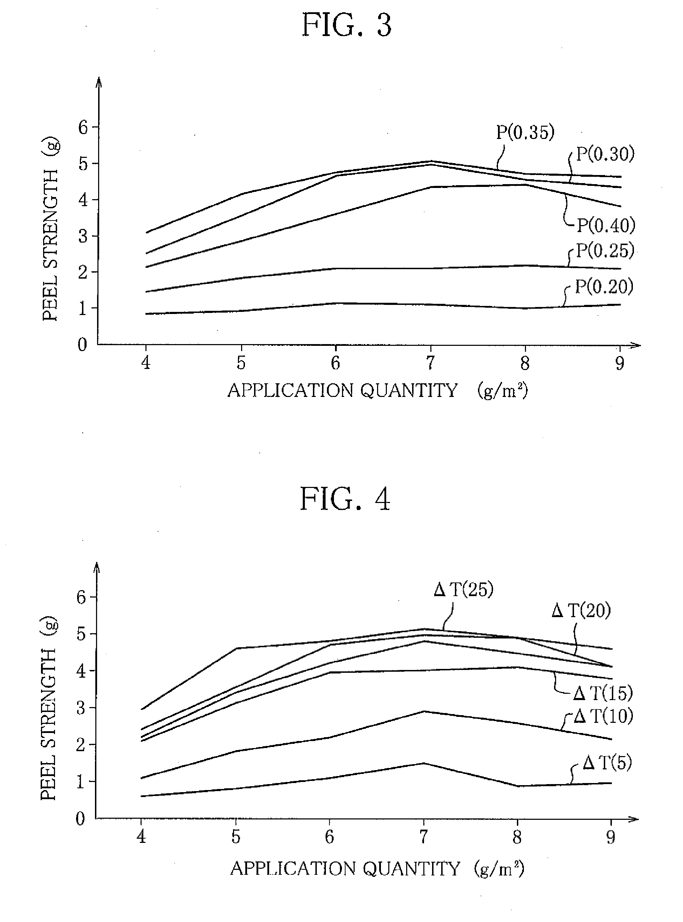

FIG. 3 shows the relation between the paraffin wax Q application quantity and the peel strength of the first and second paper layers 4, 6 when the pressure P applied to the laminated web LW is varied as a parameter. Meanwhile, FIG. 4 shows the relation between the paraffin wax Q application quantity and the peel strength of the first and second paper layers 4, 6 when the temperature difference Δ(y) between the melting point of paraffin wax and the heating temperature for the laminated web LW is varied a parameter. In FIG. 3, x in P(x) is a value in mPa, and in FIG. 4, y in ΔT(y) is a value in °C.

As clear from FIG. 3, as the pressure P applied to the laminated web LW increases, the peel strength increases. The peel strength is, however, lower when the pressure P is 0.40mPa than when the pressure P is 0.35mPa. The reason for this is thought to be that too high pressure P applied to the laminated web LW produces wrinkles in the first and second paper layers 4, 6, such wrinkles decreasing the peel strength. Thus, in order for the moisture-proof layer 8 to produce desired peel strength, or in other words, to have the adhesive strength as mentioned above, it is desirable to restrict the pressure P applied to the laminated web LW to the range of 0.20 to 0.40mPa.

Meanwhile, regarding the temperature difference ΔT, as clear from FIG. 4, as the temperature difference ΔT increases, the peel strength increases. Too great temperature difference ΔT can, however, lead to alteration of paraffin wax Q by oxidation, and therefore, production of an off-flavor. Such off-flavor spreads to the first and second paper layers 4, 6. Thus, considering the peel strength of the first and second paper layers 4, 6, that is, the adhesive strength of the moisture-proof layer 8, it is desirable to restrict the temperature difference ΔT to the range of 10 to 50°C.

### Cigarette package

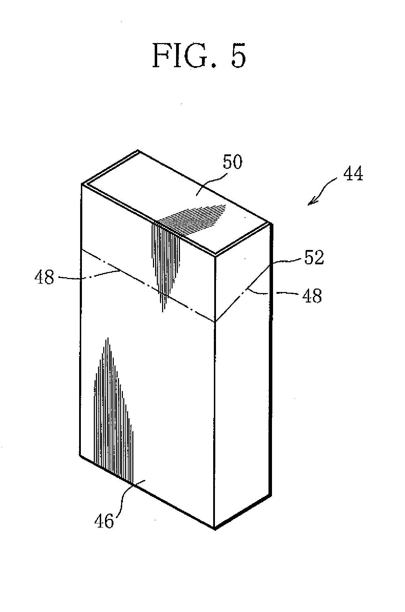

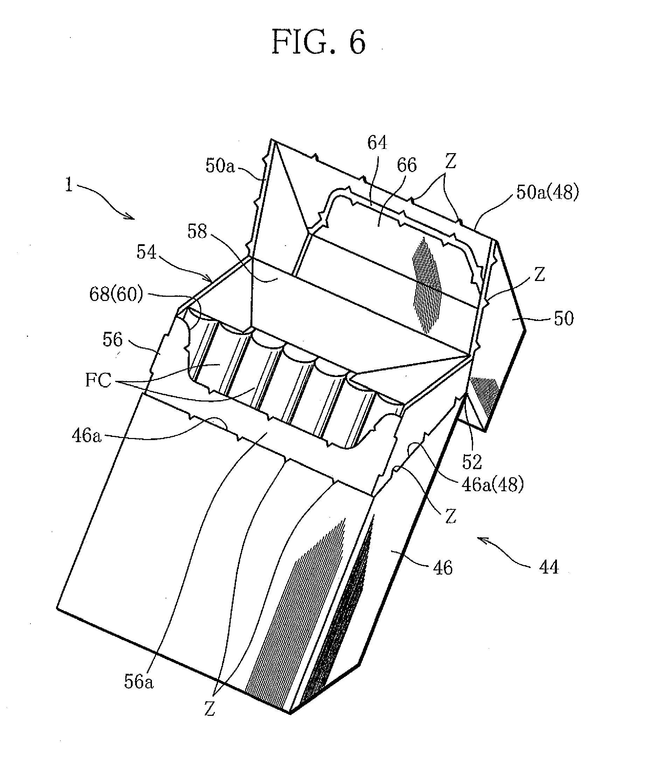

FIGS. 5 and 6 show a cigarette package using the above-described embodiment of wrapping paper 2.

The cigarette package comprises an outer box 44, and the outer box 44 includes a box body 46 and a hinge lid 50 connected to the body box 46 with a separation line 48 between. After separated from the box body 46 along the separation line 48, the hinge lid 30 can be rotated about a hinge 52. Thus, the outer box 44 is opened as shown in FIG. 6. Once the outer box 46 is opened this way, the separation along the separation line 48 leaves break marks Z at the separation edge 46a of the box body 46 as well as at the separation edge of the hinge lid 50, that is, an opening-defining edge 50a. It is to be noted that the outer box 44 is formed by folding a blank.

Within the outer box 44, an inner pack 54 is contained with an inner frame 56. The inner pack 54 includes a cigarette bundle having 20 filter cigarettes FC and an inner wrapper 58 covering the cigarette bundle. The inner wrapper 58 is made of the above-described wrapping paper.

The inner frame 56 has a U-shaped cross section, and partly covers the front surface and side surfaces of the inner pack 54. As clear from FIG. 6, when the hinge lid 50 is opened, the part of the inner frame 56 not covered by the box body 46 becomes exposed, where the edge of the inner frame 56 defines the opening of the box body 46. Meanwhile, when the hinge lid 50 is closed, the hinge lid 50 covers the part of the inner frame 56 not covered by the box body 46, where the opening-defining edge 50a meets the separation edge 46a of the box body 46.

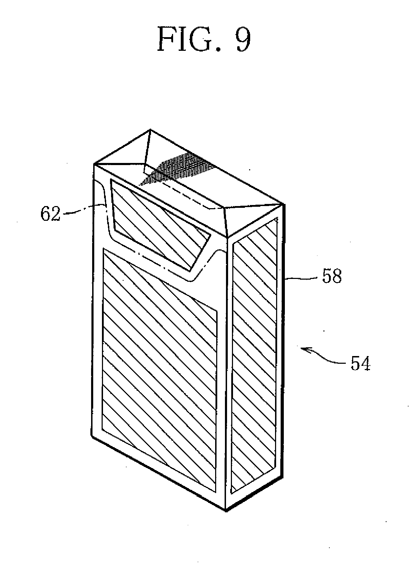

The inner frame 56 includes a front wall part 56a not covered by the front wall of the box body 46, and the front wall part 56a has a U-shaped separation line 60. Also the inner wrapper 58 of the inner pack 54 has a U-shape separation line 62 (see FIG. 9) corresponding to the separation line 60.

When the outer box 44 is first opened by turning the hinge lid 50 in the opening direction, the inner frame 56 and the inner wrapper 58 are separated along the separation lines 60, 62, respectively, so that a part of the inner frame 56 and a part of the inner wrapper 58 are separated off the other parts of the inner frame 56 and of the inner wrapper 58, as separation pieces 64, 66, respectively.

Consequently, as shown in FIG. 6, a U-shaped aperture 68 is formed in the inner frame 56, so that the cigarette bundle of the inner pack 54 becomes partly exposed, within the aperture 68. The separation pieces 64, 66 which have been separated off the inner frame 56 and inner wrapper 58 are kept stuck to the inner surface of the hinge lid 50.

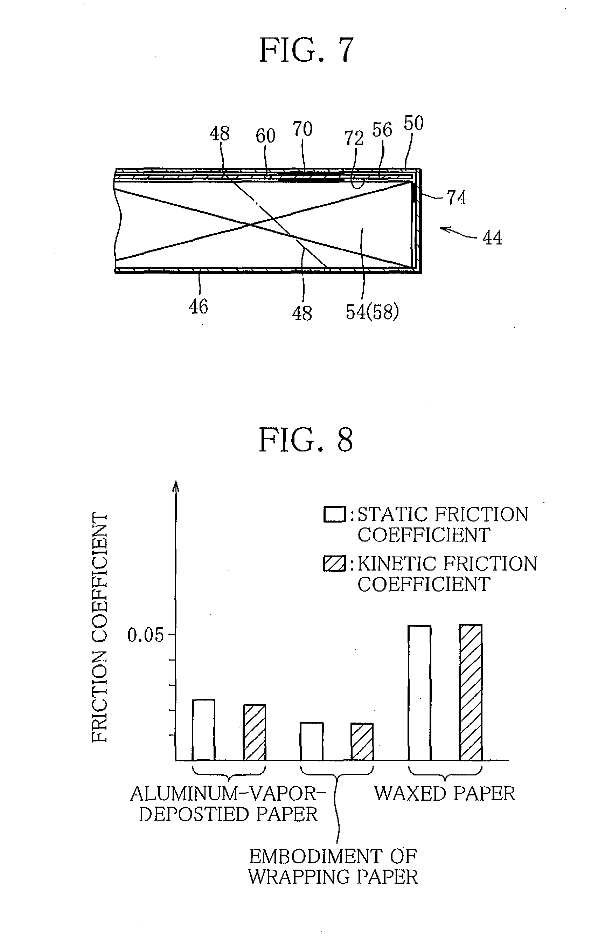

As shown in FIG. 7, in order that the separation pieces 64, 66 can be separated along the separation lines 60, 62, the part of the inner frame 56 surrounded by the separation line 60 is bonded to the inner surface of the front wall of the hinge lid 50 by a glue applied region 70, and the part of the inner wrapper 58 surrounded by the separation line 62 is bonded to the inner surface of the inner frame 56 by a glue applied region 72. The above-mentioned part of the inner wrapper 58 is bonded also to the ceiling surface of the hinge lid 50 with a glue applied region 74.

When the above-described wrapping paper 2 is used for the inner wrapper 58, the moisture-proof layer 8 present within the inner wrapper 58 satisfactorily protects the cigarette bundle, i.e., the individual cigarettes FC from moisture present outside the outer box 44 and satisfactorily prevents the aroma of the filter cigarettes FC from escaping to outside the outer box 44, until the outer box 44 is opened. Thus, the inner wrapper 58 stably maintains the quality of the cigarette bundle for a long period of time.

Once the outer box 44 is opened, break marks Z are left at the separation edge 46a of the box body 46 and the opening-defining edge 50a of the hinge lid 50. The production of the break marks Z is useful to prevent tampering with the cigarette bundle. Thus, the cigarette package only requires the outer box 44 that covers the inner pack 56, not requires a film that covers the outer box 44. Accordingly, not only excess packaging of the cigarette bundle can be avoided, but also the need to dispose of the film is obviated. Thus, the cigarette package according to the present invention contributes much to a decrease of environmental burdens.

The moisture-proof layer 8 of the inner wrapper 58 does not come into direct contact with the filter cigarettes FC, and in addition, the moisture-proof layer 8 is odorless. Thus, the moisture-proof layer 8 does not have an adverse effect on the aroma of the filter cigarettes FC.

Further, the first and second paper layers 4, 6 of the inner wrapper 58 are made of glassine paper. Thus, as shown in FIG. 8, the static and kinetic friction coefficients for the first and second paper layers 4, 6 are smaller, as compared with a paper layer made of aluminum-vapor-deposited paper generally used as the inner wrapper, and a paper layer made of waxed paper used as wrapping paper for a carton.

Further, since the glassine paper is very thin, the resilience of the inner wrapper 58 resisting folding is small although the inner wrapper 58 has the above-described triple-layer structure. Accordingly, the inner wrapper 58 can be easily folded around the cigarette bundle, and after folding, the inner wrapper 58 does not unfold back. Thus, the inner wrapper 58 can be stably folded around the cigarette bundle, and therefore, the wrapping paper 2 is particularly suitable for the inner wrapper of the inner pack 56.

As mentioned above, the first and second paper layers 4, 6 of the inner wrapper 58 are both translucent, but exceptionally, they are allowed to be not translucent. However, if one of the first and second paper layers 4, 6 is translucent, one surface of the translucent paper layer can be used as a printing surface to print desired character information, designs, etc., on.

Specifically, if the first paper layer 4 of the inner wrapper 58 is in direct contact with the cigarette bundle and the second paper layer 6 in contact with the moisture-proof layer 8 is translucent, the surface of the second paper layer 6 in contact with the moisture-proof layer 8 can be used as a printing surface. In this case, information, etc. can be printed on the printing surface, in desired positions such as on the front face and side faces of the inner pack 56, as indicated by hatching in FIG. 9.

Even when information, etc. is printed on the second paper layer 6, ink or its odor does not pass through the moisture-proof layer 8. Thus, the ink does not stain the filter cigarettes FC, and the odor of the ink does not transferred to the filter cigarettes FC.

In order to print information, etc. on the inner wrapper 58 on the inner wrapper 58 production line, a printing unit 76 can be disposed on the second feed path 32 for the second paper web W₂, as shown in FIG. 2. Alternatively, information, etc. may be printed on the second paper web W₂ in advance.

The wrapping paper according to the present invention is suited not only for the inner wrapper 58 of the inner pack 56 but also for wrapping various articles that dislike moisture.

## Claims

1. A cigarette package, comprising:
an openable and closable outer box, and
an inner pack contained within said outer box, said inner pack including a bundle of rod-shaped smoking articles and an inner wrapper covering the bundle,
the inner wrapper having
a first paper layer forming one surface of the inner wrapper,
a second paper layer forming the other surface of the inner wrapper, and
a moisture-proof layer interposed between the first and second paper layers, the moisture-proof layer containing paraffin wax as a major constituent and having a thickness sufficient to function as an adhesive agent for bonding the first and second paper layers.

2. The cigarette package according to claim 1, wherein the moisture-proof layer consists only of paraffin wax.

3. The cigarette package according to claim 2, wherein
the moisture-proof layer has an adhesive strength of about 15mN/cm or greater relative to the first and second paper layers.

4. The cigarette package according to claim 3, wherein
the moisture-proof layer has a thickness produced by applying paraffin wax in an application quantity of about 6g/m² or more.

5. The cigarette package according to claim 1, wherein
the first and second paper layers are both made of glassine paper.

6. The cigarette package according to claim 5, wherein
the first and second paper layers each have a basis weight of 20 to 40g/m².

7. The cigarette package according to claim 5, wherein
at least one of the first and second paper layers are made of translucent glassine paper.

8. The cigarette package according to claim 7, wherein
the paper layer made of translucent glassine paper has information printed on the surface facing the moisture-proof layer.

9. The cigarette package according to claim 1, wherein
said outer box includes a separation line for separating said outer box into a box body and a hinge lid.

10. Wrapping paper for a cigarette package, where the cigarette package comprises an openable and closable outer box and an inner pack contained within the outer box, the inner pack including a bundle of rod-shaped smoking articles and an inner wrapper formed from the wrapping paper and covering the bundle,
the wrapping paper comprising
a first paper layer forming one surface of the wrapping paper,
a second paper layer forming the other surface of the wrapping paper, and
a moisture-proof layer interposed between said first and second paper layers, said moisture-proof layer containing paraffin wax as a major constituent and having a thickness sufficient to function as an adhesive agent for bonding said first and second paper layers.

11. The wrapping paper according to claim 10, wherein
said first and second paper layers are both made of glassine paper.

12. The wrapping paper according to claim 10, wherein
said moisture-proof layer consists only of paraffin wax.

13. A method of manufacturing wrapping paper for a cigarette package, where the cigarette package comprises an openable and closable outer box and an inner pack contained within the outer box, the inner pack including a bundle of rod-shaped smoking articles and an inner wrapper formed from the wrapping paper and covering the bundle,
the method comprising the steps of:
applying a moisture-proof material containing paraffin wax as a major constituent onto a first paper web, thereby forming a moisture-proof layer with a thickness greater than or equal to a predetermined thickness,
placing a second paper web on said moisture-proof layer of said first paper web, thereby forming a laminated web with said moisture-proof layer interposed between said first and second paper webs, and
applying pressure to said laminated web within a predetermined pressure range, while keeping said laminated web at a temperature which is higher than a melting point of the moisture-proof material within a predetermined temperature difference range, thereby bonding said first and second paper webs by means of said moisture-proof layer functioning as an adhesive agent.

14. The method according to claim 13, wherein
said predetermined temperature difference range is 10 to 50°C and said predetermined pressure range is 0.20 to 0.40mPa.

15. The method according to claim 14, wherein
said first and second paper webs are both made of glassine paper.

16. A machine for manufacturing wrapping paper for a cigarette package, where the cigarette package comprises an openable and closable outer box and an inner pack contained within the outer box, the inner pack including a bundle of rod-shaped smoking articles and an inner wrapper formed from the wrapping paper and covering the bundle,
the machine comprising
a first feed path for feeding a first paper web,
an applicator provided on said first feed path, for applying a moisture-proof material containing paraffin wax as a major constituent onto the first paper web, thereby forming a moisture-proof layer with a thickness greater than or equal to a predetermined thickness,
a second feed path for feeding a second paper web to said first feed path,
a roller unit provided between a terminal end of said second feed path and said first feed path, for receiving the first and second paper webs from said first and second feed paths, forming a laminated web with the moisture-proof layer interposed between the first and second paper webs, and delivering the laminated web, and
a bonding device for applying pressure to the laminated web within a predetermined pressure range, while keeping the laminated web at a temperature which is higher than a melting point of the moisture-proof material within a predetermined temperature difference range, thereby bonding the first and second paper webs by means of the moisture-proof layer functioning as an adhesive agent.

17. The machine according to claim 16, wherein
said applicator includes a wax tub for holding the moisture-proof material, and
said bonding device includes a first heater for heating the moisture-proof material held in the wax tub.

18. The machine according to claim 17, wherein
said roller unit includes
a rotatable receiver roller disposed on said first feed path, and
a rotatable press roller disposed at the terminal end of said second feed path, for forming the laminated web in cooperation with the receiver roller, and
said bonding device further includes
a second heater incorporated in the receiver roller for heating the receiver roller,
a rotatable arm supporting the press roller rotatably, and
an air cylinder for rotating the arm toward the receiver roller, thereby applying pressure to the laminated web.

19. The machine according to claim 17, wherein
said applicator further includes
rollers in a pair, each rotatably arranged within the wax tub with the cylindrical surface partly immersed in the moisture-proof material, in the manner that a gap between the rollers is adjustable, and
a rotatable back roller arranged opposite to one of the rollers in a pair, with said first feed path between.

20. The machine according to claim 16, wherein
the first and second paper webs are both made of glassine paper.
